# EUROPÄISCHE PATENTSCHRIFT

(11) **EP 3 175 541 B1**
(45) Veröffentlichungstag und Bekanntmachung des Hinweises auf die Patenterteilung: **05.05.2021**
(21) Anmeldenummer: 15767446.6
(22) Anmeldetag: 10.09.2015
(51) Int. Cl.: H02M 3/156, H02M 7/5387, H02M 1/00

(54) **VORRICHTUNG UND VERFAHREN ZUM ERZEUGEN EINER WECHSELSPANNUNG MITTELS EINES TIEFSETZSTELLERS MIT POLWENDEBRÜCKE**
DEVICE AN METHOD FOR GENERATION OF AN AC VOLTAGE BY MEANS OF A BUCK CONVERTER WITH UNFOLDING BRIDGE
DISPOSITIF ET PROCÉDÉ POUR PRODUCTION D'UN TENSION CA AVEC UN ABAISSEUR ET COMMUTATEUR DE POLARITÉ

(30) Priorität: 30.09.2014 DE 102014219857
(43) Veröffentlichungstag der Anmeldung: 07.06.2017
(73) Patentinhaber: Siemens Mobility GmbH, 81739 München (DE)
(72) Erfinder: EUE, Wolfgang, 38162 Cremlingen (DE); OKYERE, Philip Fosu, 38108 Braunschweig (DE)
(86) Internationale Anmeldenummer: PCT/EP2015/070732
(87) Internationale Veröffentlichungsnummer: WO 2016/050477

(56) Entgegenhaltungen:
- EP-A1- 2 706 655
- DE-A1-102009 029 387
- DE-A1-102012 217 118

## Beschreibung

Die Erfindung bezieht sich u. a. auf eine Eisenbahnsignalbaugruppe mit einer Eisenbahnsignallampe und einer der Eisenbahnsignallampe vorgeordneten und die Eisenbahnsignallampe mit Spannung versorgenden Vorrichtung.

Eine Eisenbahnsignalbaugruppe mit den Merkmalen gemäß dem Oberbegriff des Patentanspruchs 1 sind aus der deutschen Offenlegungsschrift DE 10 2012 217 118 A1 bekannt. Vorrichtungen mit Spannungswandlern und Polwendemodulen sind aus der deutschen Offenlegungsschrift DE 10 2009 029 387 A1 und der europäischen Offenlegungsschrift EP 2 706 655 A1 bekannt.

In der Eisenbahnsignaltechnik werden zur Ansteuerung von Signallampen Schnittstellenbaugruppen in großer Zahl eingesetzt. Die Schnittstellenbaugruppen sollen eine Vielzahl unterschiedlicher Anforderungen erfüllen, beispielsweise sollen sie eine Anpassung an verschiedene Anschlussleitungswiderstände und eine Tag- und Nachtumschaltung ermöglichen sowie ausgangsseitig Wechselspannungen von z. B. 50 Hz oder 60 Hz bereitstellen können. Einfache unipolare Spannungswandler können die genannten Anforderungen nicht erfüllen.

Der Erfindung liegt die Aufgabe zugrunde, eine Eisenbahnsignalbaugruppe anzugeben, die sich kostengünstig herstellen lässt und insbesondere auch im Bereich der Eisenbahnsignaltechnik einsetzbar ist.

Diese Aufgabe wird erfindungsgemäß durch eine Eisenbahnsignalbaugruppe mit den Merkmalen gemäß Patentanspruch 1 gelöst. Vorteilhafte Ausgestaltungen der erfindungsgemäßen Eisenbahnsignalbaugruppe sind in Unteransprüchen angegeben.

Danach sind erfindungsgemäß die Merkmale gemäß Patentanspruch 1 vorgesehen.

Ein wesentlicher Vorteil der erfindungsgemäßen Eisenbahnsignalbaugruppe ist darin zu sehen, dass sich deren Vorrichtung zum Erzeugen der Ausgangsspannung mit heutzutage sehr kostengünstig erhältlichen getakteten Gleichspannungswandlern realisieren lässt. Ein Polarisationswechsel, der im Falle einer gewünschten Wechselspannung als Ausgangsspannung erforderlich ist, wird bei der erfindungsgemäßen Eisenbahnsignalbaugruppe mittels eines zusätzlich vorgesehenen Polwendemoduls erzeugt. Mit anderen Worten besteht der erfindungsgemäße Gedanke darin, dass man eine Wechselspannung sehr einfach mittels eines getakteten Gleichspannungswandlers erzeugen kann, wenn man die ausgangsseitig vom getakteten Gleichspannungswandler bereitgestellte Ausgangsspannung gezielt umstellt.

Ein weiterer wesentlicher Vorteil der erfindungsgemäßen Eisenbahnsignalbaugruppe besteht darin, dass zu deren Herstellung universelle, kommerziell erhältliche Schnittstellenbaugruppen auf der Basis getakteter Spannungswandler eingesetzt werden können; es ist völlig ausreichend, lediglich eine Firmware-Erweitung vorzunehmen und eine Polwendeschaltung pro Wechselspannungsausgang hinzuzufügen. Derartige universelle Schnittstellenbaugruppen sind heutzutage für zwei, vier oder noch mehr Ausgangsspannungen sehr kostengünstig erhältlich.

Unter anderem ist erfindungsgemäß vorgesehen, dass das Polwendemodul zunächst keine Ausgangsspannung abgibt. Erst nachdem der Betrag der Spannung am Eingang des Polwendemoduls mindestens einmalig eine vorgegebene Schwelle unterschritten hat oder mindestens einmalig im zeitlichen Verlauf ein Minimum erreicht hat (bzw. mindestens einmalig das Absinken der Spannung in einem Beobachtungszeitraum beendet worden ist), wird mit der Abgabe einer Wechselspannung als Ausgangsspannung begonnen. Diese Ausgestaltung ermöglicht ein definiertes Hochfahren der Vorrichtung insgesamt und des Polwendemoduls im speziellen nach einem neuen Einschalten.

Bei dem getakteten Spannungswandler handelt es sich vorzugsweise um einen Gleichspannungswandler, insbesondere einen Gleichspannungsabwärtswandler. Besonders bevorzugt handelt es sich um einen pulsweitengesteuerten Gleichspannungswandler, insbesondere einen pulsweitengesteuerten Gleichspannungsabwärtswandler.

Um einen vorgegebenen zeitlichen Sollverlauf der Ausgangsspannung am Ausgang der Vorrichtung zu ermöglichen, wird es als vorteilhaft angesehen, wenn die Steuereinrichtung mit dem Ausgang des Spannungswandlers in Verbindung steht und den Spannungsverlauf am Ausgang des Spannungswandlers erfasst. Bevorzugt ist die Steuereinrichtung derart ausgestaltet, dass sie den Spannungswandler derart ansteuert, dass die Abweichung zwischen dem Ausgangsspannungsverlauf am Ausgang des Spannungswandlers und einem vorgegebenen Sollverlauf minimal ist.

Vorzugsweise stellt das Polwendemodul die Polarität der Ausgangsspannung um, wenn der Betrag der Spannung am Eingang des Polwendemoduls eine vorgegebene Schwelle (z. B. Null Volt) unterschreitet oder ein Absinken der Spannung beendet ist.

Das Umstellen der Polarität wird bei einer bevorzugten Ausgestaltung seitens der Steuereinrichtung initiiert; in diesem Zusammenhang wird es als vorteilhaft angesehen, wenn die Steuereinrichtung mit dem Polwendemodul in Verbindung steht und zum Polaritätswechsel jeweils ein Umstellsignal für das Polwendemodul erzeugt.

Alternativ kann vorgesehen sein, dass das Polwendemodul eine autarke Komponente bildet, die die Polarität am Ausgang des Polwendemoduls bzw. die Ausgangsspannung umstellt, wenn der Betrag der Spannung am Eingang des Polwendemoduls eine vorgegebene Schwelle unterschreitet oder im zeitlichen Verlauf ein Minimum annimmt (also das Absinken der Spannung am Eingang des Polwendemoduls in einem Beobachtungszeitraum beendet ist) .

Der vorgegebene Spannungsverlauf ist vorzugsweise periodisch. Im Falle eines periodischen Spannungsverlaufs wird es als vorteilhaft angesehen, wenn die Polarität der Ausgangsspannung jeweils nach Ablauf der Periodendauer des Spannungsverlaufs umgestellt wird. Die Teilsignalabschnitte des periodischen Spannungsverlaufs sind bevorzugt halbsinusförmig, dreieckförmig oder trapezförmig.

Besonders bevorzugt wird das Polwendemodul mit der Abgabe einer Gleichspannung als Ausgangsspannung beginnen, wenn innerhalb einer vorgegebenen Wartezeitspanne, insbesondere nach einem Neueinschalten der Vorrichtung, die Spannung am Eingang des Polwendemoduls stets größer als eine vorgegebene Schwelle ist oder im zeitlichen Verlauf kein Minimum erreicht. Eine solche Ausgestaltung ermöglicht den Betrieb der Vorrichtung sowohl zum Erzeugen einer Wechselspannung als auch zum Erzeugen einer Gleichspannung als Ausgangsspannung. Die Vorrichtung bildet in diesem Falle mit anderen Worten eine Universalschaltung, die beim Ausbleiben von Nulldurchgängen bzw. Schwellwertunterschreitungen auf Gleichspannungsbetrieb entscheidet bzw. auf einen solchen umschaltet.

Bei dem Polwendemodul kann es sich um ein "selbst mitlaufendes" Polwendeschaltungsmodul handeln, das unabhängig die eingangsseitig anliegende Ausgangsspannung des vorgeordneten Spannungswandlers auswertet und selbsttätig einen Polarisationswechsel jedes Mal dann initiiert, wenn die Ausgangsspannung des Spannungswandlers eine vorgegebene Schwelle unterschreitet oder ein Absinken der Spannung abgeschlossen wird. Ein solches selbst mitlaufendes Polwendeschaltungsmodul kann nach Art einer PLL (Phasenregelschleife) mit einer Eigenfrequenz von z. B. 100 Hz (bei 50 Hz Ausgangswechselspannung) und einem kleinen Fangbereich versehen werden, damit etwaig eingekoppelte Störungen nicht zu einer unzeitigen Umschaltung des Polwendeschaltungsmoduls führen können.

Die Erfindung bezieht sich darüber hinaus auf ein Verfahren zum Betreiben einer Eisenbahnsignalbaugruppe. Bezüglich eines solchen Verfahrens ist erfindungsgemäß vorgesehen, dass ein getakteter Spannungswandler derart angesteuert wird, dass dieser ausgangsseitig einen vorgegebenen und stets dieselbe Polarität aufweisenden Ausgangsspannungsverlauf erzeugt, und mit einem Polwendemodul die Polarität des Ausgangsspannungsverlaufs des Spannungswandlers regelmäßig umgestellt wird und ausgangsseitig eine Wechselspannung erzeugt wird, die die zu erzeugende Ausgangsspannung bildet, wobei das Polwendemodul zunächst keine Ausgangsspannung abgibt und erst mit der Abgabe einer Wechselspannung als Ausgangsspannung beginnt, nachdem der Betrag der Spannung am Eingang des Polwendemoduls mindestens einmalig eine vorgegebene Schwelle unterschritten hat oder nachdem mindestens einmalig das Absinken dieser Spannung im zeitlichen Verlauf beendet wurde.

Bezüglich der Vorteile des erfindungsgemäßen Verfahrens sei auf die obigen Ausführungen im Zusammenhang mit der erfindungsgemäßen Eisenbahnsignalbaugruppe verwiesen.

Bezüglich des Verfahrens wird es als vorteilhaft angesehen, wenn ein pulsweitengesteuerter Gleichspannungsabwärtswandler derart angesteuert wird, dass dieser einen periodischen Ausgangsspannungsverlauf erzeugt, und mit dem Polwendemodul die Polarität des periodischen Ausgangsspannungsverlaufs des Gleichspannungsabwärtswandlers umgestellt wird, wenn der Betrag der Spannung des Spannungsverlaufs am Eingang des Polwendemoduls eine vorgegebene Schwelle unterschreitet oder das Absinken der dort anliegenden Spannung (z. B. in einem Beobachtungsintervall) beendet ist.

Als vorteilhaft wird es angesehen, wenn ein pulsweitengesteuerter Gleichspannungsabwärtswandler derart angesteuert wird, dass der Spannungsverlauf Halbwellen stets derselben Polarität aufweist.

Bevorzugt wird als Ausgangsspannung eine Wechselspannung erzeugt, deren betragsmäßiger Verlauf dem Ausgangsspannungsverlauf des Spannungswandlers entspricht, jedoch zeitlich eine wechselnde Polarität aufweist.

Die Erfindung wird nachfolgend anhand von Ausführungsbeispielen näher erläutert; dabei zeigen beispielhaft
- Figur 1: ein Ausführungsbeispiel für eine erfindungsgemäße Vorrichtung zum Erzeugen einer Ausgangsspannung,
- Figur 2: beispielhaft einen Pulssignalverlauf zur Ansteuerung eines pulsweitengesteuerten Gleichspannungswandlers der Vorrichtung gemäß Figur 1,
- Figur 3: beispielhaft einen Ausgangsspannungsverlauf, den der pulsweitengesteuerte Gleichspannungswandler gemäß Figur 1 erzeugen kann,
- Figur 4: ein Ausführungsbeispiel für ein Polwendemodul für die Vorrichtung gemäß Figur 1,
- Figur 5: beispielhaft den Verlauf einer Ausgangsspannung, die die Vorrichtung gemäß Figur 1 erzeugen kann,
- Figur 6: ein weiteres Ausführungsbeispiel für eine erfindungsgemäße Vorrichtung zum Erzeugen einer Ausgangsspannung und
- Figur 7: ein Ausführungsbeispiel für ein Polwendemodul für die Vorrichtung gemäß Figur 6.

In den Figuren werden der Übersicht halber für identische oder vergleichbare Komponenten stets dieselben Bezugszeichen verwendet.

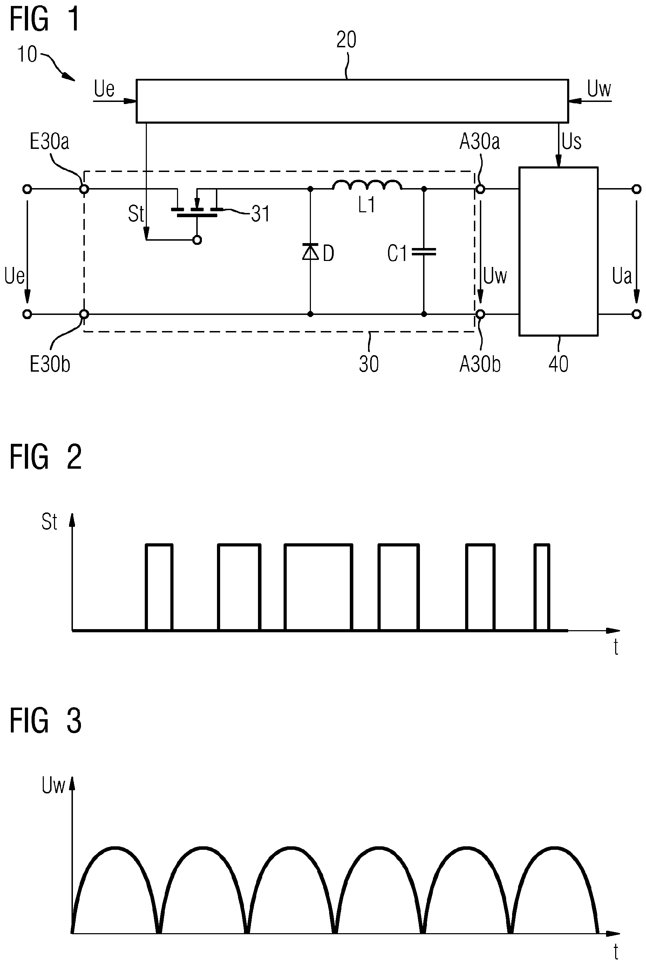

Die Figur 1 zeigt eine Vorrichtung 10 zum Erzeugen einer Ausgangsspannung Ua. Die Vorrichtung 10 umfasst eine Steuereinrichtung 20, einen pulsweitengesteuerten Gleichspannungswandler 30 in Form eines Gleichspannungsabwärtswandlers und ein Polwendemodul 40.

Der pulsweitengesteuerte Gleichspannungswandler 30 ist mit einem Schalter 31, einer Induktivität L1, einem Kondensator C1 und einer Diode D ausgestattet.

Die Vorrichtung 10 gemäß Figur 1 kann beispielsweise wie folgt betrieben werden:
An Eingangsanschlüsse E30a und E30b des Gleichspannungswandlers 30 wird eine Gleichspannung Ue angelegt. Der Schalter 31 des Gleichspannungswandlers 30 wird mittels eines von der Steuereinrichtung 20 bereitgestellten Pulssignals ST pulsweitengesteuert, so dass sich an Ausgangsanschlüssen A30a und A30b des Gleichspannungswandlers 30 ein von dem Pulssignal ST abhängiger Ausgangsspannungsverlauf Uw ergibt.

Die Steuereinrichtung 20 überwacht den Ausgangsspannungsverlauf Uw an den Ausgangsanschlüssen A30a und A30b des Gleichspannungswandlers 30 und stellt das Pulssignal ST bzw. die Pulsweite des Pulssignals ST derart ein, dass sich an den Ausgangsanschlüssen A30a und A30b des Gleichspannungswandlers 30 ein vorgegebener und vorzugsweise in der Steuereinrichtung 20 fest abgespeicherter Sollverlauf ergibt.

Nachfolgend wird beispielhaft davon ausgegangen, dass die Steuereinrichtung 20 ein Pulssignal ST erzeugt, wie es im zeitlichen Verlauf in der Figur 2 über der Zeit t dargestellt ist, und dass sich an den Ausgangsanschlüssen A30a und A30b des Gleichspannungswandlers 30 ein Ausgangsspannungsverlauf Uw ergibt, wie er beispielhaft in der Figur 3 über der Zeit t dargestellt ist. Es lässt sich erkennen, dass der Ausgangsspannungsverlauf Uw an den Ausgangsanschlüssen A30a und A30b des Gleichspannungswandlers 30 stets dieselbe Polarität aufweist. Ein Polaritätswechsel an den Ausgangsanschlüssen ist aufgrund der oben erwähnten Ausgestaltung des Wandlers als Gleichspannungswandler 30 ausgeschlossen.

Der Ausgangsspannungsverlauf Uw an den Ausgangsanschlüssen A30a und A30b gelangt zu dem Polwendemodul 40, das ebenfalls von der Steuereinrichtung 20 angesteuert wird. Das Polwendemodul ist geeignet, die Polarität des eingangsseitig anliegenden Ausgangsspannungsverlaufs Uw des Gleichspannungswandlers 30 umzustellen, wenn es von der Steuereinrichtung 20 durch ein Umstellsignal Us entsprechend angesteuert wird.

Nachfolgend wird beispielhaft davon ausgegangen, dass das Polwendemodul 40 durch die Steuereinrichtung 20 mittels des Umstellsignals Us derart angesteuert wird, dass das Polwendemodul 40 die Polarität der Ausgangsspannung am Ausgang des Polwendemoduls 40 umstellt, wenn der Betrag der Spannung an den Ausgangsanschlüssen A30a und A30b des Gleichspannungswandlers 30 eine vorgegebene Schwelle unterschreitet oder im zeitlichen Verlauf ein lokales Minimum annimmt (bzw. mit anderen Worten ein Absinken der Spannung im Spannungsverlauf gerade beendet ist). Bei der letztgenannten Variante, bei der das Absinken der Spannung überwacht wird, kann beispielsweise eine zeitliche Ableitung des Ausgangsspannungsverlaufs Uw gebildet und hinsichtlich eines Nulldurchgangs überwacht werden.

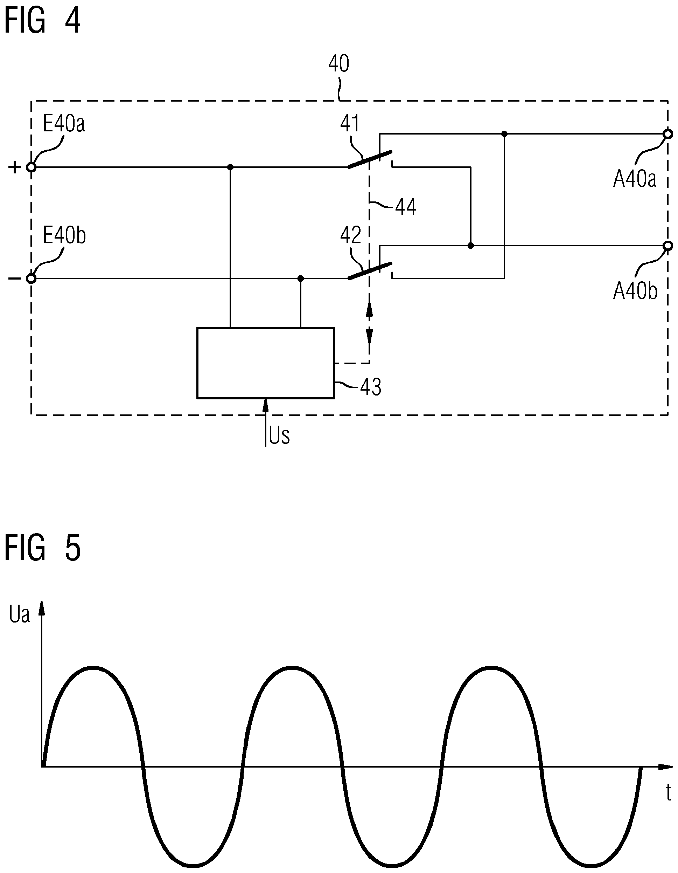

Handelt es sich bei dem Sollverlauf, den der Ausgangsspannungsverlauf Uw an den Ausgangsanschlüssen A30a und A30b des Gleichspannungswandlers 30 aufweisen soll, um einen halbsinusförmigen periodischen Spannungsverlauf, wie er beispielhaft in der Figur 3 dargestellt ist, so wird das Polwendemodul 40 als Ausgangsspannung Ua am Ausgang der Vorrichtung 10 eine sinusförmige Wechselspannung erzeugen, wie sie beispielhaft in der Figur 5 dargestellt ist.

Bezüglich der Ausgestaltung der Steuereinrichtung 20 kann außerdem vorgesehen sein, dass diese ähnlich wie eine Phasenregelschleife arbeitet. Beispielsweise kann die Steuereinrichtung 20 derart ausgestaltet sein, dass sie - im Falle eines periodischen Sollverlaufs der Ausgangsspannung - nach einem jeden Polwendevorgang bzw. nach jedem Polaritätswechsel jeweils ein Erwartungszeitfenster für den jeweils nächsten Polwechsel startet. Die Länge des Erwartungszeitfensters entspricht der halben Periodendauer des Sollverlaufs oder ist vorzugsweise etwas länger als diese. Besonders bevorzugt liegt die Länge des Erwartungszeitfensters zwischen 55% und 60% der Periodendauer des Sollverlaufs. Wenn bei Ablauf des jeweils laufenden Erwartungszeitfensters eine Schwellwertunterschreitung durch den Ausgangsspannungsverlauf Uw am Ausgang des Gleichspannungswandlers 30 immer noch nicht stattgefunden hat oder ein Ende des Absinkens der Spannung immer noch nicht stattgefunden hat, wird die Steuereinrichtung 20 den Polaritätswechsel vorzugsweise dennoch auslösen, um die Periodizität der Ausgangsspannung Ua aufrechtzuerhalten.

Um die beschriebene Funktionalität der Steuereinrichtung 20 gemäß Figur 1 zu gewährleisten, ist diese vorzugsweise mit einer Recheneinrichtung, beispielsweise in Form eines Mikroprozessors, ausgestattet, die derart programmiert ist, dass sie die beschriebene Steuerung des Gleichspannungswandlers 30 und des Polwendemoduls 40 durchführen kann. Die Steuereinrichtung 20 und der Gleichspannungswandler 30 werden vorzugsweise durch einen digitalen Signalverarbeitungsbaustein gebildet, in dem die genannten Komponenten integriert, bevorzugt monolithisch integriert, sind.

Die Figur 4 zeigt ein Ausführungsbeispiel für ein Polwendemodul 40, wie es bei der Vorrichtung 10 gemäß Figur 1 eingesetzt werden kann. Das Polwendemodul 40 weist zwei Schalter 41 und 42 auf, die jeweils zwei Endstellungen einnehmen können. In der in der Figur 4 dargestellten oberen Endstellung des Schalters 41 verbindet dieser den Eingangsanschluss E40a des Polwendemoduls 40 mit dem Ausgangsanschluss A40a des Polwendemoduls 40. Der in der Figur 4 untere Schalter 42 verbindet den Eingangsanschluss E40b mit dem Ausgangsanschluss A40b des Polwendemoduls 40.

Werden die beiden Schalter 41 und 42 umgestellt und in eine in der Figur 4 untere Endstellung umgeschaltet, so verbindet der Schalter 41 den Eingangsanschluss E40a mit dem Ausgangsanschluss A40b und der Schalter 42 den Eingangsanschluss E40b mit dem Ausgangsanschluss A40a.

Auch können die Schalter 41 und 42 bei dem Ausführungsbeispiel gemäß Figur 4 eine Zwischenstellung einnehmen, in der die Eingangsanschlüsse E40a und E40b von den Ausgangsanschlüssen A40a und A40b getrennt sind und ausgangsseitig keine Ausgangsspannung erzeugt wird.

Um eine entsprechende Umschaltung der beiden Schalter 41 und 42 synchron bzw. zeitlich aufeinander abgestimmt durchführen zu können, ist das Polwendemodul 40 bei dem Ausführungsbeispiel gemäß Figur 4 mit einer eigenen Ansteuereinheit 43 ausgestattet, die das Umstellsignal Us der Steuereinrichtung 20 auswertet und ein Umstellen der beiden Schalter 41 und 42 hervorruft, wenn seitens der Steuereinrichtung 20 ein Umpolen gewünscht wird.

Bei dem Ausführungsbeispiel gemäß Figur 4 sind die beiden Schalter 41 und 42 durch mechanische Schaltelemente gebildet, die mittels einer Schaltstange 44 mechanisch verstellt werden. Alternativ ist es möglich, die beiden Schalter 41 und 42 durch Halbleiterschaltelemente zu bilden, die gemeinsam die Schaltfunktion ausüben, wie sie im Zusammenhang mit den Schaltern 41 und 42 gemäß Figur 4 dargestellt ist. Beispielsweise ist es möglich, das beschriebene Schaltverhalten der beiden Schalter 41 und 42 durch vier Halbleiterschaltelemente, beispielsweise in Form von Transistoren, zu gewährleisten bzw. zu erreichen, die in einer Brückenschaltung verschaltet sind.

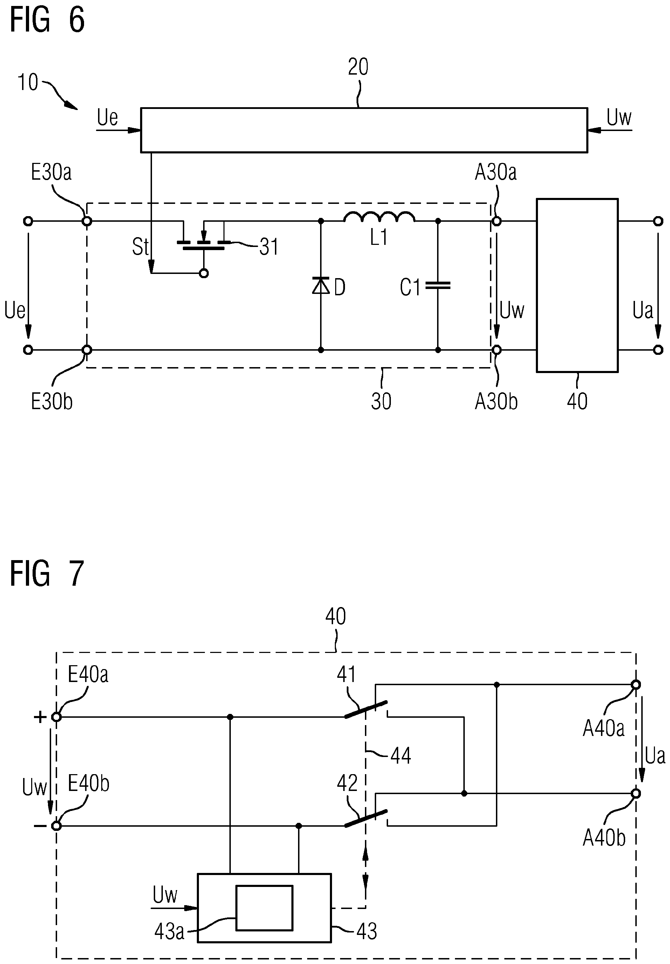

Die Figur 6 zeigt ein weiteres Ausführungsbeispiel für eine Vorrichtung zum Erzeugen einer Ausgangsspannung Ua mit einer eingangsseitig anliegenden Gleichspannung Ue. Das Ausführungsbeispiel gemäß Figur 6 entspricht im Wesentlichen dem Ausführungsbeispiel gemäß Figur 1 mit der Ausnahme, dass bei dem Ausführungsbeispiel gemäß Figur 6 das Polwendemodul 40 autark arbeitet und ohne ein Umstellsignal Us seitens der Steuereinrichtung 20 auskommt. Das Polwendemodul 40 überwacht selbsttätig den Ausgangsspannungsverlauf Uw an den Ausgangsanschlüssen A30a und A30b des Gleichspannungswandlers 30 und initiiert einen Polwechsel jeweils dann, wenn der Betrag der Spannung am Ausgang des Gleichspannungswandlers 30 eine vorgegebene Schwelle unterschreitet oder ein Absinken des Spannungsverlaufs jeweils gerade beendet ist (wenn also die zeitliche Ableitung des Ausgangsspannungsverlaufs Uw eine Nullstelle aufweist oder der Ausgangsspannungsverlauf Uw im zeitlichen Verlauf ein lokales Minimum aufweist).

Die Figur 7 zeigt ein Ausführungsbeispiel für ein Polwendemodul 40, das bei dem Ausführungsbeispiel gemäß Figur 6 eingesetzt werden kann. Es lässt sich erkennen, dass eine zum Ansteuern der beiden Schalter 41 und 42 vorgesehene Ansteuereinheit 43 mit dem Ausgangsspannungsverlauf Uw beaufschlagt ist. Die Ansteuereinheit 43 ist bei dem Ausführungsbeispiel gemäß Figur 7 derart ausgestaltet, dass sie ein Umstellen der beiden Schalter 41 und 42 hervorruft, wenn der Betrag der Spannung am Ausgang des Gleichspannungswandlers 30 eine vorgegebene Schwelle (z. B. Null Volt) unterschreitet oder ein Absinken des Spannungsverlaufs jeweils beendet ist (wenn also die zeitliche Ableitung des Ausgangsspannungsverlaufs Uw eine Nullstelle aufweist oder der Ausgangsspannungsverlauf Uw im zeitlichen Verlauf ein lokales Minimum aufweist).

Um die beschriebene Funktionalität der Ansteuereinheit 43 gemäß Figur 7 zu gewährleisten, ist diese vorzugsweise mit einer Recheneinrichtung, beispielsweise in Form eines Mikroprozessors, 43a ausgestattet, die in entsprechender Weise programmiert ist.

Bezüglich der Ausgestaltung der Ansteuereinheit 43 kann außerdem vorgesehen sein, dass diese ähnlich wie eine Phasenregelschleife arbeitet. Beispielsweise kann die Ansteuereinheit 43 derart ausgestaltet sein, dass sie - im Falle eines periodischen Sollverlaufs der Ausgangspannung -, nach einem jeden Polwendevorgang bzw. nach jedem Polaritätswechsel jeweils ein Erwartungszeitfenster für den jeweils nächsten Polwechsel startet. Die Länge des Erwartungszeitfensters entspricht der halben Periodendauer des Sollverlaufs oder ist vorzugsweise etwas länger als diese. Besonders bevorzugt liegt die Länge des Erwartungszeitfensters zwischen 55% und 60% der Periodendauer des Sollverlaufs. Wenn bei Ablauf des jeweils laufenden Erwartungszeitfensters eine Schwellwertunterschreitung durch den Betrag der Spannung am Eingang des Polwendemoduls immer noch nicht stattgefunden hat und auch ein Ende des Absinkens der Spannung immer noch nicht stattgefunden hat, wird die Steuereinrichtung 20 den Polaritätswechsel vorzugsweise dennoch auslösen, um die Periodizität der Ausgangsspannung Ua aufrechtzuerhalten.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, welcher durch die Ansprüche definiert wird.

### Bezugszeichenliste

- 10: Vorrichtung
- 20: Steuereinrichtung
- 30: Gleichspannungswandler
- 31: Schalter
- 40: Polwendemodul
- 41: Schalter
- 42: Schalter
- 43: Ansteuereinheit
- 43a: Recheneinrichtung
- 44: Schaltstange

- A30a: Ausgangsanschluss
- A30b: Ausgangsanschluss
- A40a: Ausgangsanschluss
- A40b: Ausgangsanschluss
- C1: Kondensator
- D: Diode
- E30a: Eingangsanschluss
- E30b: Eingangsanschluss
- E40a: Eingangsanschluss
- E40b: Eingangsanschluss
- L1: Induktivität
- ST: Pulssignal
- t: Zeit
- Ua: Ausgangsspannung
- Ue: Gleichspannung
- Us: Umstellsignal
- Uw: Ausgangsspannungsverlauf

## Patentansprüche

1. Eisenbahnsignalbaugruppe mit einer Eisenbahnsignallampe und einer der Eisenbahnsignallampe vorgeordneten und die Eisenbahnsignallampe mit Spannung versorgenden Vorrichtung (10) zum Erzeugen einer Ausgangsspannung (Ua),
wobei die Vorrichtung (10) aufweist:
- einen getakteten Spannungswandler, der eingangsseitig mit Gleichspannung beaufschlagbar ist, und
- eine den getakteten Spannungswandler ansteuernde Steuereinrichtung (20), die den Spannungswandler derart ansteuert, dass dieser ausgangsseitig einen vorgegebenen und stets dieselbe Polarität aufweisenden Ausgangsspannungsverlauf (Uw) erzeugt,
**dadurch gekennzeichnet, dass** die Vorrichtung ein Polwendemodul (40) aufweist, das eingangsseitig mit dem Ausgang des Spannungswandlers in Verbindung steht und durch Umpolen des eingangseitig anliegenden Ausgangsspannungsverlaufs (Uw) des Spannungswandlers ausgangsseitig eine Wechselspannung erzeugt, die die Ausgangsspannung (Ua) der Vorrichtung (10) bildet,
wobei die Vorrichtung (10) derart ausgestaltet ist, dass das Polwendemodul (40) zunächst keine Ausgangsspannung (Ua) abgibt und erst mit der Abgabe einer Wechselspannung als Ausgangsspannung (Ua) beginnt, nachdem der Betrag der Spannung am Eingang des Polwendemoduls (40) mindestens einmalig eine vorgegebene Schwelle unterschritten hat oder nachdem mindestens einmalig das Absinken dieser Spannung im zeitlichen Verlauf beendet wurde, wodurch ein definiertes Hochfahren der Vorrichtung insgesamt und des Polwendemoduls im speziellen nach einem neuen Einschalten ermöglicht wird.

2. Eisenbahnsignalbaugruppe nach Anspruch 1,
**dadurch gekennzeichnet, dass** der getaktete Spannungswandler ein pulsweitengesteuerter Gleichspannungswandler (30), insbesondere Gleichspannungsabwärtswandler, ist.

3. Eisenbahnsignalbaugruppe nach einem der voranstehenden Ansprüche,
**dadurch gekennzeichnet, dass**
- die Steuereinrichtung (20) mit dem Ausgang des Spannungswandlers in Verbindung steht und den Ausgangsspannungsverlauf (Uw) am Ausgang des Spannungswandlers erfasst und
- die Steuereinrichtung (20) derart ausgestaltet ist, dass sie den Spannungswandler derart ansteuert, dass die Abweichung zwischen dem Ausgangsspannungsverlauf (Uw) am Ausgang des Spannungswandlers und einem vorgegebenen Sollverlauf minimal ist.

4. Eisenbahnsignalbaugruppe nach einem der voranstehenden Ansprüche,
**dadurch gekennzeichnet, dass** das Polwendemodul (40) die Polarität der Ausgangsspannung (Ua) umstellt, wenn der Betrag der Spannung am Eingang des Polwendemoduls (40) eine vorgegebene Schwelle unterschreitet oder ein Absinken der Spannung beendet ist.

5. Eisenbahnsignalbaugruppe nach einem der voranstehenden Ansprüche 1 bis 3,
**dadurch gekennzeichnet, dass** die Steuereinrichtung (20) mit dem Polwendemodul (40) in Verbindung steht und zum Polaritätswechsel jeweils ein Umstellsignal (Us) für das Polwendemodul (40) erzeugt.

6. Eisenbahnsignalbaugruppe nach einem der voranstehenden Ansprüche,
**dadurch gekennzeichnet, dass** der vorgegebene Ausgangsspannungsverlauf (Uw) am Ausgang des Spannungswandlers periodisch ist.

7. Eisenbahnsignalbaugruppe nach Anspruch 6,
**dadurch gekennzeichnet, dass** die Polarität der Ausgangsspannung (Ua) jeweils nach Ablauf der Periodendauer des Ausgangsspannungsverlaufs (Uw) am Ausgang des Spannungswandlers umgestellt wird.

8. Eisenbahnsignalbaugruppe nach einem der voranstehenden Ansprüche 6 bis 7,
**dadurch gekennzeichnet, dass** die Teilsignalabschnitte des periodischen Ausgangsspannungsverlaufs (Uw) am Ausgang des Spannungswandlers halbsinusförmig, dreieckförmig oder trapezförmig sind.

9. Eisenbahnsignalbaugruppe nach einem der voranstehenden Ansprüche,
**dadurch gekennzeichnet, dass** die Vorrichtung (10) derart ausgestaltet ist, dass das Polwendemodul (40) mit der Abgabe einer Gleichspannung als Ausgangsspannung (Ua) beginnt, wenn innerhalb einer vorgegebenen Wartezeitspanne, insbesondere nach einem Einschalten der Vorrichtung (10), keine Schwellwertunterschreitung durch die Eingangsspannung am Eingang des Polwendemoduls (40) oder kein Ende des Absinkens der Eingangsspannung am Polwendemodul (40) auftritt.

10. Eisenbahnsignalbaugruppe nach einem der voranstehenden Ansprüche,
**dadurch gekennzeichnet, dass** die Vorrichtung (10) derart ausgestaltet ist, dass sie, wenn der Ausgangsspannungsverlauf (Uw) des Spannungswandlers betragsmäßig eine vorgegebene Schwelle unterschreitet oder im zeitlichen Verlauf ein lokales Minimums aufweist, ein Erwartungszeitfenster für das nächste dieser periodischen Ereignisse bestimmt und ein nachfolgendes Umschalten der Polarität der Ausgangsspannung (Ua) am Ende des Erwartungszeitfensters auch dann auslöst, wenn das Auftreten einer weiteren Schwellwertunterschreitung oder das Auftreten eines weiteren lokalen Minimums des Ausgangsspannungsverlaufs (Uw) des Spannungswandlers ausbleibt.

11. Verfahren zum Betreiben einer Eisenbahnsignalbaugruppe nach einem der voranstehenden Ansprüche und zum Erzeugen einer Ausgangsspannung (Ua), wobei ein getakteter Spannungswandler derart angesteuert wird, dass dieser ausgangsseitig einen vorgegebenen und stets dieselbe Polarität aufweisenden Ausgangsspannungsverlauf (Uw) erzeugt,
**dadurch gekennzeichnet, dass** mit einem Polwendemodul (40) die Polarität des Ausgangsspannungsverlaufs (Uw) des Spannungswandlers regelmäßig umgestellt wird und ausgangsseitig eine Wechselspannung erzeugt wird, die die zu erzeugende Ausgangsspannung (Ua) bildet, wobei das Polwendemodul (40) zunächst keine Ausgangsspannung (Ua) abgibt und erst mit der Abgabe einer Wechselspannung als Ausgangsspannung (Ua) beginnt, nachdem der Betrag der Spannung am Eingang des Polwendemoduls (40) mindestens einmalig eine vorgegebene Schwelle unterschritten hat oder nachdem mindestens einmalig das Absinken dieser Spannung im zeitlichen Verlauf beendet wurde, wodurch ein definiertes Hochfahren der Vorrichtung insgesamt und des Polwendemoduls im speziellen nach einem neuen Einschalten ermöglicht wird.

12. Verfahren nach Anspruch 11,
**dadurch gekennzeichnet, dass**
- ein pulsweitengesteuerter Gleichspannungsabwärtswandler derart angesteuert wird, dass dieser einen periodischen Ausgangsspannungsverlauf (Uw) erzeugt, und
- mit dem Polwendemodul (40) die Polarität des periodischen Ausgangsspannungsverlaufs (Uw) des Gleichspannungsabwärtswandlers umgestellt wird, wenn der Betrag der Spannung am Eingang des Polwendemoduls (40) eine vorgegebene Schwelle unterschreitet oder nicht weiter absinkt.

13. Verfahren nach einem der voranstehenden Ansprüche 11 bis 12,
**dadurch gekennzeichnet, dass**
- ein pulsweitengesteuerter Gleichspannungsabwärtswandler derart angesteuert wird, dass der Spannungsverlauf Halbwellen stets derselben Polarität aufweist, und/oder
- als die Ausgangsspannung (Ua) eine Wechselspannung erzeugt wird, deren betragsmäßiger Verlauf dem Ausgangsspannungsverlauf (Uw) des Spannungswandlers entspricht, jedoch zeitlich eine wechselnde Polarität aufweist.

## Claims

1. Railway signal assembly with a railway signal lamp and a device (10) which is arranged upstream of the railway signal lamp and supplies voltage to the railway signal lamp in order to generate an output voltage (Ua),
wherein the device (10) has:
- a clocked voltage converter, to which direct voltage can be applied on the input side, and
- a control facility (20) which controls the clocked voltage converter and controls the voltage converter so that on the output side this generates a predetermined output voltage curve (Uw) which always has the same polarity,
**characterised in that**
the device has a polarity reversing module (40), which is connected on the input side with the output of the voltage converter and on the output side generates an alternating voltage by reversing the polarity of the output voltage curve (Uw) of the voltage converter which is present on the input side, said alternating voltage forming the output voltage (Ua) of the device (10),
wherein the device (10) is configured so that the polarity reversing module (40) does not output an output voltage (Ua) initially and does not begin to output an alternating voltage as an output voltage (Ua) until after the absolute value of the voltage at the input of the polarity reversing module (40) has fallen below a predetermined threshold at least once or until after the reduction in this voltage has been ended at least once over time, as a result of which a defined power-up of the device overall and of the polarity reversing module in particular is enabled after a restart.

2. Railway signal assembly according to claim 1,
**characterised in that**
the clocked voltage converter is a pulse-width-controlled direct voltage converter (30), in particular direct voltage step-down converter.

3. Railway signal assembly according to one of the preceding claims,
**characterised in that**
- the control facility (20) is connected to the output of the voltage converter and detects the output voltage curve (Uw) at the output of the voltage converter and
- the control facility (20) is configured to control the voltage converter so that the variation between the output voltage curve (Uw) at the output of the voltage converter and a predetermined target curve is minimal.

4. Railway signal assembly according to one of the preceding claims,
**characterised in that**
the polarity reversing module (40) converts the polarity of the output voltage (Ua) if the absolute value of the voltage at the input of the polarity reversing module (40) falls below a predetermined threshold or a reduction in the voltage is ended.

5. Railway signal assembly according to one of the preceding claims 1 to 3,
**characterised in that**
the control facility (20) is connected to the polarity reversing module (40) and in each case generates a conversion signal (Us) for the polarity reversing module (40) in order to change the polarity.

6. Railway signal assembly according to one of the preceding claims,
**characterised in that**
the predetermined output voltage curve (Uw) at the output of the voltage converter is periodic.

7. Railway signal assembly according to claim 6,
**characterised in that**
after the cycle duration of the output voltage curve (Uw) has elapsed, the polarity of the output voltage (Ua) is converted at the output of the voltage converter.

8. Railway signal assembly according to one of the preceding claims 6 to 7,
**characterised in that**
the partial signal sections of the periodic output voltage curve (Uw) have a semi-sinusoidal, triangular or trapezoidal shape at the output of the voltage converter.

9. Railway signal assembly according to one of the preceding claims,
**characterised in that**
the device (10) is configured so that the polarity reversing module (40) begins outputting a direct voltage as an output voltage (Ua), if the input voltage does not fall below the threshold value at the input of the polarity reversing module (40) or the reduction in the input voltage at the polarity reversing module (40) does not end within a predetermined waiting time, in particular after the device (10) is switched on.

10. Railway signal assembly according to one of the preceding claims,
**characterised in that**
the device (10) is configured so that if the output voltage curve (Uw) of the voltage converter falls below a predetermined threshold in terms of absolute value or has a local minimum over time, it determines an expected timeframe for the next of these periodic events and also then triggers a subsequent switchover of the polarity of the output voltage (Ua) at the end of the expected timeframe even in the absence of an occurrence of falling below the threshold value again or of an occurrence of a further local minimum of the output voltage curve (Uw) of the voltage converter.

11. Method for operating a railway signal assembly according to one of the preceding claims and for generating an output voltage (Ua), wherein a clocked voltage converter is controlled so that on the output side this generates a predetermined output voltage curve (Uw) which always has the same polarity,
**characterised in that**
with a polarity reversing module (40) the polarity of the output voltage curve (Uw) of the voltage converter is converted regularly and an alternating voltage, which forms the output voltage (Ua) to be generated, is generated on the output side, wherein the polarity reversing module (40) does not output an output voltage (Ua) initially and does not begin to output an alternating voltage as an output voltage (Ua) until after the absolute value of the voltage at the input of the polarity reversing module (40) has fallen below a predetermined threshold at least once or until after the reduction in this voltage has been ended at least once over time, as a result of which a defined power-up of the device overall and of the polarity reversing module in particular is enabled after a restart.

12. Method according to claim 11,
**characterised in that**
- a pulse-width-controlled direct voltage step-down converter is controlled so that this generates a periodic output voltage curve (Uw), and
- with the polarity reversing module (40) the polarity of the periodic output voltage curve (Uw) of the direct voltage step-down converter is converted if the absolute value of the voltage at the input of the polarity reversing module (40) falls below a predetermined threshold or does not drop further.

13. Method according to one of the preceding claims 11 to 12,
**characterised in that**
- a pulse-width-controlled direct voltage step-down converter is controlled so that the voltage curve always has half-waves of the same polarity, and/or
- an alternating voltage is generated as the output voltage (Ua), the curve of which in terms of absolute value corresponds to the output voltage curve (Uw) of the voltage converter but has an alternating polarity over time.

## Revendications

1. Ensemble de signal de voies de chemin de fer, comprenant une lampe de signal de voies ferrées et un système (10) disposé avant la lampe de signal de voies ferrées et alimentant la lampe de signal de voies ferrées en tension pour la production d'une tension (Ua) de sortie,
dans lequel le système (10) a :
- un transformateur de tension cadencé, auquel une tension continue peut être appliquée du côté de l'entrée, et
- un dispositif (20) de commande commandant le transformateur de tension cadencé, qui commande le transformateur de tension de manière à ce que celui-ci produise du côté de la sortie une courbe (Uw) de tension de sortie donnée à l'avance et ayant toujours la même polarité,
**caractérisé en ce que**
le système a un module (40) d'inversion de la polarité, qui est en liaison du côté de l'entrée avec la sortie du transformateur de tension et qui produit, par inversion de polarité de la courbe (Uw) de tension de sortie s'appliquant du côté de l'entrée du transformateur de tension, du côté de la sortie une tension alternative, qui forme la tension (Ua) de sortie du système (10),
le système (10) étant conformé de manière à ce que le module (40) d'inversion de la polarité ne donne pas d'abord de tension (Ua) de sortie et commence à donner une tension alternative comme tension (Ua) de sortie seulement après que la valeur absolue de la tension à l'entrée du module (40) d'inversion de la polarité est devenue inférieure au moins une fois à un seuil donné à l'avance ou après qu'au moins une fois il a été mis fin au moins une fois à l'abaissement de cette tension dans la courbe en fonction du temps, grâce à quoi une mise en route définie du système dans son ensemble et du module d'inversion de la polarité en particulier est rendue possible après une nouvelle mise en circuit.

2. Ensemble de signal de voies de chemin de fer suivant la revendication 1,
**caractérisé en ce que**
le transformateur de tension cadencé est un transformateur (30) de tension continue commandé en largeur d'impulsion, notamment un transformateur abaisseur de tension continue.

3. Ensemble de signal de voies de chemin de fer suivant l'une des revendications précédentes,
**caractérisé en ce que**
- le dispositif (20) de commande est en liaison avec la sortie du transformateur de tension et relève la courbe (Uw) de tension de sortie à la sortie du transformateur de tension et
- le dispositif (20) de commande est conformé de manière à commander le transformateur de tension de façon à ce que l'écart entre la courbe (Uw) de tension de sortie à la sortie du transformateur de tension et une courbe de consigne donnée à l'avance soit minimum.

4. Ensemble de signal de voies de chemin de fer suivant l'une des revendications précédentes,
**caractérisé en ce que**
le module (40) d'inversion de la polarité inverse la polarité de la tension (Ua) de sortie si la valeur absolue de la tension à l'entrée du module (40) d'inversion de la polarité devient inférieure à un seuil donné à l'avance ou s'il est mis fin à un abaissement de la tension.

5. Ensemble de signal de voies de chemin de fer suivant l'une des revendications 1 à 3 précédentes,
**caractérisé en ce que**
le dispositif (20) de commande est en liaison avec le module (40) d'inversion de la polarité et produit pour le changement de polarité respectivement un signal (Us) d'inversion pour le module (40) d'inversion de la polarité.

6. Ensemble de signal de voies de chemin de fer suivant l'une des revendications précédentes,
**caractérisé en ce que**
la courbe (Uw) de tension de sortie donnée à l'avance à la sortie du transformateur de tension est périodique.

7. Ensemble de signal de voies de chemin de fer suivant la revendication 6,
**caractérisé en ce que**
la polarité de la tension (Ua) de sortie est inversée respectivement après l'écoulement de la durée de la période de la courbe (Uw) de tension de sortie à la sortie du transformateur de tension.

8. Ensemble de signal de voies de chemin de fer suivant l'une des revendications 6 à 7 précédentes,
**caractérisé en ce que**
les parties de signal partielles de la courbe (Uw) de tension de sortie périodique à la sortie du transformateur de tension sont semi sinusoïdales, triangulaires ou trapézoïdales.
frémi sinusoïdales

9. Ensemble de signal de voies de chemin de fer suivant l'une des revendications précédentes,
**caractérisé en ce que**
le système (10) est conformé de manière à ce que le module (40) d'inversion de la polarité commence à donner une tension continue comme tension (Ua) de sortie si dans un laps de temps d'attente donné à l'avance, notamment après la mise hors circuit du système (10), il n'est pas apparu de passage en dessous de la valeur de seuil par la tension d'entrée à l'entrée du module (40) d'inversion de la polarité ou s'il n'a pas été mis fin à l'abaissement de la tension d'entrée au module (40) d'inversion de la polarité.

10. Ensemble de signal de voies de chemin de fer suivant l'une des revendications précédentes,
**caractérisé en ce que**
le système (10) est conformé de manière à, si la courbe (Uw) de tension de sortie du transformateur de tension devient inférieure en valeur absolue à un seuil donné à l'avance ou s'il y a un minimum local dans la courbe en fonction du temps, déterminer un créneau temporel d'attente pour l'événement périodique suivant immédiatement celui-ci et déclenche une inversion venant ensuite de la polarité de la tension (Ua) de sortie à la fin du créneau temporel d'attente, même si l'apparition d'un autre passage en dessous de la valeur de seuil de l'apparition d'un autre minimum local de la courbe (Uw) de tension de sortie du transformateur de tension ne se produit pas.

11. Procédé pour faire fonctionner un ensemble de signal de voies de chemin de fer suivant l'une des revendications précédentes et pour produire une tension (Ua) de sortie, dans lequel on commande un transformateur de tension cadencé de manière à ce que celui-ci produise du côté de la sortie une courbe (Uw) de tension de sortie donnée à l'avance ayant toujours la même polarité,
**caractérisé en ce que**
par un module (40) d'inversion de la polarité, on inverse régulièrement la polarité de la courbe (Uw) de tension de sortie du transformateur de tension et on produit du côté de la sortie une tension alternative, qui forme la tension (Ua) de sortie à produire, le module (40) d'inversion de la polarité ne donnant pas d'abord de tension (Ua) de sortie et ne commençant à donner une tension alternative comme tension (Ua) de sortie qu'après que la valeur absolue de la tension à l'entrée du module (40) d'inversion de la polarité est devenue inférieure au moins une fois à un seuil donné à l'avance ou qu'après qu'au moins une fois il a été mis fin à l'abaissement de cette tension dans la courbe en fonction du temps, grâce à quoi une mise en route définie du système dans son ensemble et du module d'inversion de la polarité en particulier est rendue possible après une nouvelle mise en circuit.

12. Procédé suivant la revendication 11,
**caractérisé en ce que**
- on commande un transformateur réducteur de la tension continue commandé en largeur d'impulsion de manière à ce qu'il produise une courbe (Uw) de tension de sortie périodique et,
- par le module (40) d'inversion de la polarité, on inverse la polarité de la courbe (Uw) de tension de sortie périodique du transformateur abaisseur de tension continue, si la valeur absolue de la tension à l'entrée du module (40) d'inversion de la polarité devient inférieure à un seuil donné à l'avance ou ne s'est pas abaissée davantage.

13. Procédé suivant l'une des revendications 11 à 12 précédentes,
**caractérisé en ce que**
- on commande un transformateur réducteur de tension continue commandé en largeur d'impulsion de manière à ce que la courbe de tension ait des demi-ondes toujours de la même polarité, et/ou
- on produit comme tension (Ua) de sortie une tension alternative, dont la courbe en valeur absolue correspond à la courbe (Uw) de tension de sortie du transformateur de tension, mais a une polarité alternée dans le temps.
